# EUROPÄISCHE PATENTSCHRIFT

(11) **EP 3 379 197 B1**
(45) Veröffentlichungstag und Bekanntmachung des Hinweises auf die Patenterteilung: **17.06.2020**
(21) Anmeldenummer: 17205106.2
(22) Anmeldetag: 04.12.2017
(51) Int. Cl.: F41H 13/00, G02B 26/02, G02B 26/06, G02B 27/14, H01S 3/13, H01S 3/23

(54) **VORRICHTUNG UND VERFAHREN ZUM BESTRAHLEN EINES OBJEKTS**
METHOD AND DEVICE FOR IRRADIATING AN OBJECT
DISPOSITIF ET PROCÉDÉ D'IRRADIATION D'UN OBJET

(30) Priorität: 24.03.2017 DE 102017002882
(43) Veröffentlichungstag der Anmeldung: 26.09.2018
(73) Patentinhaber: MBDA Deutschland GmbH, 86529 Schrobenhausen (DE)
(72) Erfinder: ZOZ, Jürgen, 86316 Friedberg (DE); PROTZ, Rudolf, 85635 Höhenkirchen-Siegertsbrunn (DE)
(74) Vertreter: Isarpatent

(56) Entgegenhaltungen:
- DE-A1-102011 015 779
- US-B1- 6 708 003

## Beschreibung

Die vorliegende Erfindung betrifft eine Vorrichtung und ein Verfahren zum Bestrahlen eines Objekts.

Lasersysteme mit großen Reichweiten werden vielseitig eingesetzt. Neben militärischen Anwendungen, etwa zur Zerstörung von mobilen Flugobjekten, existieren auch zahlreiche zivile Anwendungen, beispielsweise zur optischen Übertragung von Daten über große Distanzen oder zur Beseitigung von Schrott in der Atmosphäre, sogenanntem Weltraumschrott, mithilfe von am Boden stationierten Lasern.

Bei großen Reichweiten ist eine genaue Fokussierung und Winkelausrichtung der Laserstrahlen von hoher Bedeutung. Zusätzlich werden hohe Anforderungen an die Ausgangsstrahlleistung gestellt, um das Ziel mit ausreichender Intensität bestrahlen zu können.

Vorteilhafterweise werden daher Mehrkanal-Lasersysteme eingesetzt, wobei eine Vielzahl von Einzelstrahlen über eine geeignete Apertur koordiniert und abgestrahlt werden. Die Strahlen können sich im Zielpunkt kohärent oder auch inkohärent überlagern.

Auf dem Weg zum Zielpunkt durchlaufen die einzelnen Laserstrahlen bei Vorhandensein von starker atmosphärischer Turbulenz Bereiche in der Luft mit unterschiedlicher Dichte, was dazu führt, dass sich die Wellenfront der abgestrahlten Laserstrahlung verändert.

Zur Kompensation von atmosphärischen Effekten auf dem Ausbreitungsweg ist aus den Druckschriften DE 10 2011 015 779 A1 sowie DE 10 2007 049 436 B4 eine Regelung der Phasen der Einzelstrahlen bekannt. Dadurch kann die Lichtintensität am Zielpunkt erhöht werden.

Die US 6 708 003 B1 beschreibt ein Bestrahlen eines Objekts mit einem Teststrahl, wobei von dem Objekt reflektiertes Licht durch einen Sensor erfasst wird, um atmosphärische Einflüsse auf die Strahlausbreitung zu erfassen. Ein von einer Lichtquelle abgestrahlter Laserstrahl wird entsprechend den erfassten Einflüssen korrigiert.

Es ist eine Aufgabe der Erfindung, derartige Lasersysteme weiter zu verbessern.

Diese Aufgabe wird durch eine Vorrichtung zum Bestrahlen eines Objekts mit den Merkmalen des Patentanspruchs 1 und durch ein Verfahren zum Bestrahlen eines Objekts mit den Merkmalen des Patentanspruchs 9 gelöst. Vorteilhafte Ausführungsformen sind Gegenstand der jeweiligen Unteransprüche.

Gemäß einem ersten Aspekt betrifft die Erfindung demnach eine Vorrichtung zum Bestrahlen eines Objekts, mit einer Lichtaussendeeinrichtung, einer Sensoreinrichtung und einer Regeleinrichtung. Die Lichtaussendeeinrichtung ist zum Aussenden eines aus einer Vielzahl von Einzelstrahlen gebündelten Laserstrahls auf das Objekt ausgebildet. Eine jeweilige Strahlungsleistung und eine jeweilige Phase eines jeden Einzelstrahls sind einstellbar. Die Sensoreinrichtung ist dazu ausgebildet, von dem Objekt reflektiertes Licht zu empfangen und daraus Informationen bezüglich einer Veränderung der jeweiligen Strahlungsleistung und der jeweiligen Phase der Einzelstrahlen während der Lichtlaufzeit zum Objekt zu ermitteln. Die Regeleinrichtung ist dazu ausgebildet, die Strahlungsleistungen und die Phasen der Einzelstrahlen in Abhängigkeit von den Informationen, welche von der Sensoreinrichtung ermittelt wurden, anzupassen bzw. zu regeln.

Gemäß einem zweiten Aspekt betrifft die Erfindung demnach ein Verfahren zum Bestrahlen eines Objekts. Ein aus einer Vielzahl von Einzelstrahlen gebündelter Laserstrahl wird auf das Objekt ausgesendet, wobei jeweils eine Strahlungsleistung und eine Phase der Einzelstrahlen einstellbar sind. Von dem Objekt reflektiertes Licht wird empfangen und Informationen bezüglich einer Veränderung der jeweiligen Strahlungsleistung und der jeweiligen Phase der Einzelstrahlen während der Lichtlaufzeit zum Objekt werden anhand des empfangenen reflektierten Lichts ermittelt. Die Strahlungsleistungen und die Phasen der Einzelstrahlen werden in Abhängigkeit von den ermittelten Informationen angepasst.

Indem sowohl die Phasen als auch die Strahlungsleistungen angepasst werden, ermöglicht es die Erfindung, zusätzlich die Auswirkungen atmosphärischer Turbulenzeffekte auf die Intensitätsverteilung der Laserstrahlung zu berücksichtigen. Der Einfluss durch Szintillationseffekte, welche von wesentlicher Bedeutung für die Bündelung der gesamten Laserstrahlung am Zielpunkt sind, kann dadurch kompensiert werden. Insbesondere bei starken atmosphärischen Turbulenzbedingungen ist somit eine sehr effiziente Übertragung der Laserleistung möglich. Die Erfindung ermöglicht eine optimale Verteilung der vorhandenen Primärleistung, d. h. derjenigen Lichtleistung, welche der Vorrichtung zur Verfügung steht, auf die Einzelstrahlen.

Gemäß einer bevorzugten Weiterbildung der Vorrichtung weist die Lichtaussendeeinrichtung jeweils einen Laser zum Erzeugen der jeweiligen Einzelstrahlen auf. Die Vorrichtung kombiniert somit die Strahlen von mehreren Lasern, um die Intensität zu erhöhen. Vorzugsweise wird die Maximalleistung der jeweiligen Laser derart dimensioniert, dass sie ein Vielfaches, beispielsweise ein Zwei-, Fünf- oder Zehnfaches, eines Quotienten beträgt, welche durch Teilen der Auslegungsgröße der Gesamtleistung der Vorrichtung durch die Anzahl der einzelnen Laser gebildet wird. Dadurch wird eine ausreichende Skalierung und Umverteilung der Gesamtleistung auf die Laser ermöglicht.

Gemäß einer bevorzugten Weiterbildung der Vorrichtung umfasst die Lichtaussendeeinrichtung weiter eine Strahlenkombinationseinrichtung, welche die Einzelstrahlen zu dem Laserstrahl kombiniert. Die Strahlenkumulationseinrichtung kann eine Vielzahl von optischen Elementen, wie Linsen, Spiegeln oder Prismen umfassen.

Gemäß einer bevorzugten Weiterbildung der Vorrichtung umfasst die Strahlenkombinationseinrichtung einen Facettenspiegel, einen Fangspiegel und einen Kollimatorspiegel. Die Einzelstrahlen werden über den Facettenspiegel auf den Fangspiegel gerichtet, welcher die Einzelstrahlen auf den Kollimatorspiegel umgelenkt. Der Kollimatorspiegel ist dazu ausgebildet, die Einzelstrahlen im Wesentlichen koaxial als Laserstrahl auszusenden.

Gemäß einer Weiterbildung der Vorrichtung ist der Fangspiegel relativ zu dem Kollimatorspiegel axial verschiebbar angeordnet. Insbesondere kann die Vorrichtung eine Teleskopoptik aufweisen.

Gemäß einer bevorzugten Ausführungsform der Vorrichtung weist die Lichtaussendeeinrichtung ferner einen Hauptlaser zum Erzeugen von Laserlicht und eine Vielzahl von Lichtleitern auf. Das erzeugte Laserlicht wird in die Lichtleiter eingeleitet, wobei die Lichtleiter zum Aussenden der jeweiligen Einzelstrahlen ausgebildet sind. Besonders bevorzugt umfasst die Lichtaussendeeinrichtung einen Faserlaser. Gemäß dieser Ausführungsform ist die Lichtaussendeeinrichtung insbesondere zum Aussenden eines kohärenten Laserstrahls ausgebildet.

Gemäß einer bevorzugten Weiterbildung weist die Vorrichtung darüber hinaus eine Beleuchtungseinrichtung auf, welche dazu ausgelegt ist, einen Beleuchtungslaserstrahl auf das Objekt auszusenden, wobei das von der Sensoreinrichtung empfangene und ausgewertete reflektierte Licht den an dem Objekt reflektierten Beleuchtungslaserstrahl umfasst. Beispielsweise kann der Laserstrahl zum Zerstören des Objekts ausgebildet sein, während der Beleuchtungslaserstrahl mit einer geringeren Intensität bzw. Strahlungsleistung lediglich zur Regelung der Strahlungsleistungen und Phasen der Einzelstrahlen dient.

Vorzugsweise unterscheidet sich der Wellenlängenbereich des Beleuchtungslaserstrahls von dem Wellenlängenbereich des Laserstrahls. Dadurch wird eine klare Unterscheidung des reflektierten Beleuchtungslaserstrahls von einer möglichen Reflexion des Laserstrahls selbst ermöglicht. Vorzugsweise kann zusätzlich noch eine Wellenlängenabhängigkeit der durch die Turbulenzeinflüsse erzeugten Varianz der Intensitätsverteilung berücksichtigt werden. Insbesondere kann die Sensoreinrichtung zuerst eine Veränderung der Strahlungsleistung des reflektierten Beleuchtungslaserstrahls bestimmen, und unter Einberechnung der Rytov-Varianz die Veränderung der Strahlungsleistung der Einzelstrahlen selbst bestimmen.

Erfindungsgemäß ist die Regeleinrichtung ferner dazu ausgelegt, die Einzelstrahlen mit unterschiedlichen Frequenzen zu modulieren. Die Sensoreinrichtung ist dazu ausgelegt, anhand des reflektierten Lichts eine modulationsabhängige Strahlungsleistungsveränderung der Einzelstrahlen während der Lichtlaufzeit zum Objekt zu ermitteln. Die Regeleinrichtung ist dazu ausgelegt, die Strahlungsleistungen und die Phasen der Einzelstrahlen derart zu verändern, dass die Gesamtintensität der Laserstrahlen beim Auftreffen auf das Objekt maximiert wird. Die Vorrichtung ist somit dazu ausgelegt, ein modifiziertes Multi-Dither-Verfahren durchzuführen, wobei zusätzlich zur Veränderung bzw. Regelung der Phasen auch eine Regelung der Strahlungsleistungen durchgeführt wird.

Gemäß einer bevorzugten Weiterbildung des Verfahrens werden die jeweiligen Einzelstrahlen durch jeweils einen Laser erzeugt.

Gemäß einer Weiterbildung des Verfahrens wird Laserlicht mittels eines Hauptlasers erzeugt, wobei das erzeugte Laserlicht in eine Vielzahl von Lichtleitern eingeleitet wird, und wobei jeweiligen Einzelstrahlen aus den Lichtleitern ausgesendet werden.

Gemäß einer bevorzugten Ausführungsform des Verfahrens wird das Objekt mit einem Beleuchtungslaserstrahl beleuchtet, wobei das empfangene und ausgewertete reflektierte Licht den an dem Objekt reflektierten Beleuchtungslaserstrahl umfasst.

Gemäß einer Weiterbildung des Verfahrens unterscheidet sich ein Wellenlängenbereich des Beleuchtungslaserstrahls von dem Wellenlängenbereich des Laserstrahls.

Bei dem erfindungsgemäßen Verfahren werden die Einzelstrahlen mit unterschiedlichen Frequenzen moduliert, wobei anhand des reflektierten Lichts eine modulationsabhängige Strahlungsleistungsveränderung der Einzelstrahlen während der Lichtlaufzeit zum Objekt ermittelt wird. Die Strahlungsleistungen und die Phasen der Einzelstrahlen werden derart verändert, dass die Gesamtintensität der Laserstrahlen beim Auftreffen auf das Objekt maximiert wird.

Im Folgenden wird die Erfindung unter Bezugnahme auf die Figuren der Zeichnungen erläutert.
- Figur 1: zeigt ein schematisches Blockschaltbild einer Vorrichtung zum Bestrahlen eines Objekts gemäß einer ersten Ausführungsform der Erfindung;
- Figur 2: zeigt eine schematische Querschnittsansicht einer Vorrichtung zum Bestrahlen eines Objekts gemäß einer zweiten Ausführungsform der Erfindung;
- Figur 3: zeigt eine schematische Frontansicht der in Figur 2 illustrierten Vorrichtung;
- Figur 4: zeigt eine weitere Querschnittsansicht der in den Figuren 2 und 3 gezeigten Vorrichtung, wobei die an dem Objekt reflektierte Strahlung illustriert ist;
- Figur 5: zeigt eine schematische Querschnittsansicht eine Vorrichtung zum Bestrahlen eines Objekts gemäß einer dritten Ausführungsform der Erfindung;
- Figur 6: zeigt eine schematische Querschnittsansicht einer Vorrichtung zum Bestrahlen eines Objekts gemäß einer vierten Ausführungsform der Erfindung; und
- Figur 7: zeigt ein Flussdiagramm eines Verfahrens zum Bestrahlen eines Objekts.

In den Figuren bezeichnen dieselben Bezugszeichen gleiche oder funktionsgleiche Komponenten, soweit nichts Gegenteiliges angegeben ist. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden. Verschiedene Ausführungsformen können beliebig miteinander kombiniert werden, sofern dies sinnvoll ist.

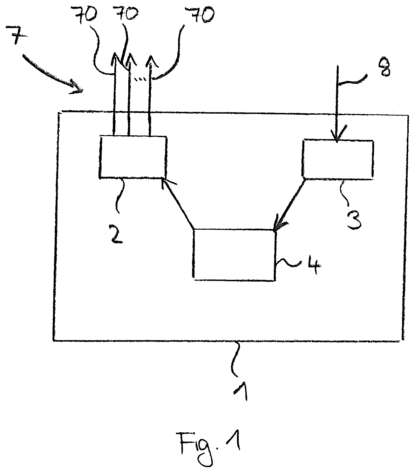

In Figur 1 ist ein schematisches Blockschaltbild einer Vorrichtung 1 zum Bestrahlen eines Objekts gemäß einer ersten Ausführungsform illustriert. Die Vorrichtung 1 umfasst eine Lichtaussendeeinrichtung 2, welche einen aus einer Vielzahl von Einzelstrahlen 70 gebündelten Laserstrahl 7 aussendet. Darunter kann zu verstehen sein, dass die Einzelstrahlen 70 versetzt zueinander im Wesentlichen koaxial ausgesendet werden. Es kann jedoch auch zu verstehen sein, dass die Einzelstrahlen 70 durch optische Elemente, etwa durch Linsen, Spiegel oder Prismen, zu einem Strahl zusammengeführt werden.

Weiter umfasst die Vorrichtung 1 eine Sensoreinrichtung 3, welche dazu ausgebildet ist, Licht 8 zu empfangen, welches von dem Objekt reflektiert wurde. Das reflektierte Licht 8 kann aus einer Reflexion des an dem Objekt reflektierten Laserstrahls 7 resultieren. Jedoch kann auch vorgesehen sein, dass die Vorrichtung 1 weiter eine Beleuchtungseinrichtung umfasst, welche dazu ausgebildet ist, einen Beleuchtungslaserstrahl auf das Objekt auszusenden, wobei das reflektierte Licht 8 die Reflexion des Beleuchtungslaserstrahls an dem Objekt umfasst.

Die Sensoreinrichtung 3 ermittelt schließlich Informationen bezüglich einer Veränderung der jeweiligen Strahlungsleistung und der jeweiligen Phase der Einzelstrahlen 70 während der Lichtlaufzeit bzw. während der Laufstrecke zum Objekt. Insbesondere kann die Sensoreinrichtung 3 dazu ausgebildet sein, einen Vergleich der Strahlungsleistungen und der Phasen der Einzelstrahlen 70 relativ zueinander durchzuführen und eine relative Veränderung der Strahlungsleistungen und der Phasen der Einzelstrahlen zu bestimmen.

Die Vorrichtung 1 umfasst weiter eine Regeleinrichtung 4, welche mit der Sensoreinrichtung 3 und mit der Lichtaussendeeinrichtung 2 gekoppelt ist, und dazu ausgebildet ist, die Strahlungsleistungen und die Phasen der Einzelstrahlen 70 in Abhängigkeit von den ermittelten Informationen anzupassen. Vorzugsweise ist die Regeleinrichtung 4 dazu ausgebildet, die Strahlungsleistungen und die Phasen der Einzelstrahlen 70 derart zu regeln, dass die Einflüsse von atmosphärischen Turbulenzen kompensiert werden. Beispielsweise kann die Regeleinrichtung 4 die Strahlungsleistungen und die Phasen der Einzelstrahlen 70 derart regeln, dass eine Intensität des Laserstrahls 7 beim Auftreffen auf das Objekt maximiert wird. Die Phasen können hierbei derart geregelt werden, dass die Wellenfront des Laserstrahls 7 beim Auftreffen auf das Objekt im Wesentlichen planar ist und senkrecht zur Ausbreitungsrichtung des Laserstrahls 7 steht.

Die Regelung der Strahlungsleistungen der Einzelstrahlen 70 kann derart durchgeführt werden, dass die der Lichtaussendeeinrichtung 2 zur Verfügung stehende Gesamtstrahlungsleistung derart auf die Einzelstrahlen 70 verteilt wird, dass die Intensität des Laserstrahls 7 beim Auftreffen auf das Objekt maximiert wird. Beispielsweise können die Strahlungsleistungen der Einzelstrahlen 70 derart geregelt werden, dass die Intensität des von der Sensoreinrichtung 3 empfangenen reflektierten Lichts 38 maximiert wird.

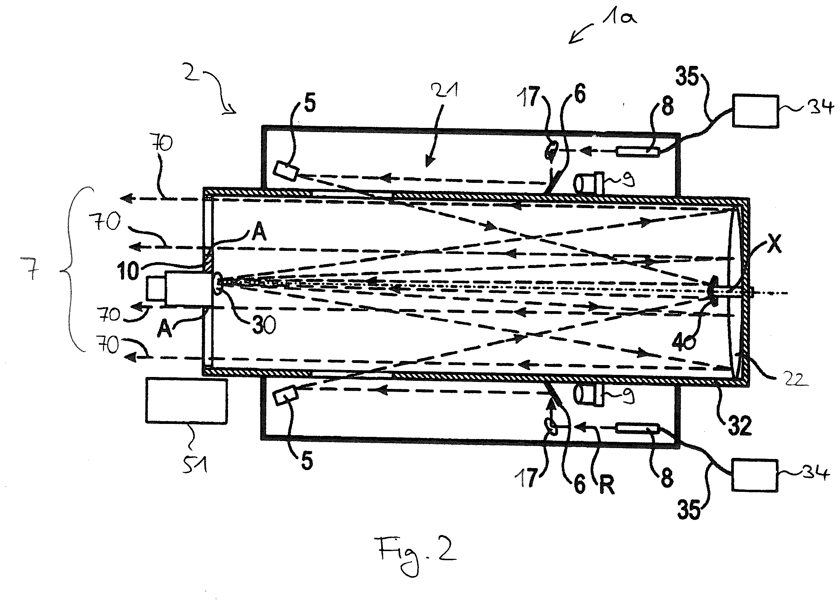

In Figur 2 ist eine Querschnittsansicht einer Vorrichtung 1a gemäß einer zweiten Ausführungsform der Erfindung illustriert. Die Vorrichtung 1a weist eine Lichtaussendeeinrichtung 2 mit einer zylindrischen Hülle 32 auf. Die Lichtaussendeeinrichtung 2 umfasst mehrere radial angeordnete Laser 34, welche dazu ausgebildet sind, Einzelstrahlen 70 zu erzeugen. Weiter umfasst die Vorrichtung 1a eine Strahlenkombinationseinrichtung 21, welche die Einzelstrahlen 70 zu einem Laserstrahl 7 kombiniert. Die Einzelstrahlen 70 werden hierzu durch jeweilige Lichtleitfasern 35 in schematisch dargestellte Faserstecker 8 eingekoppelt. Von dort aus breiten sich die Einzelstrahlen 70 in axialer Richtung X aus und treffen auf einen jeweiligen Parabolspiegel 17, welcher den entsprechenden Einzelstrahl 70 in radialer Richtung auf einen jeweiligen Strahlenteilerspiegel 6 ablenkt. Von dort aus breiten sich die Einzelstrahlen 70 wiederum in axialer Richtung X aus und treffen auf einen jeweiligen Kippspiegel 5, welcher um zwei Achsen herum schwenkbar ist. Die Kippspiegel 5 richten die Einzelstrahlen 70 auf einen Facettenspiegel 40 der Lichtaussendeeinrichtung 2, welcher sich an einem ersten, hinteren Ende der Lichtaussendeeinrichtung 2 befindet. Die Einzelstrahlen 70 werden in axialer Richtung X auf einen an einem zweiten, vorderen Ende der Lichtaussendeeinrichtung 2 befindlichen Fangspiegel 30 abgelenkt, welcher die Einzelstrahlen 70 auf einen Kollimatorspiegel 22 ablenkt, welcher hinter dem Facettenspiegel 40 am ersten Ende der Lichtaussendeeinrichtung 2 angeordnet ist.

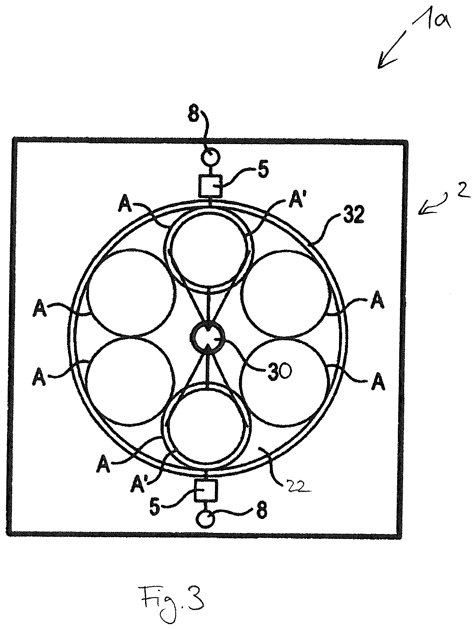

In Figur 3 ist eine Draufsicht auf das zweite, vorderen Ende der Lichtaussendeeinrichtung 2 illustriert. Der Kollimatorspiegel 22 lenkt die Einzelstrahlen 70 durch entsprechende Subaperturen A' einer Austrittsoptik mit einer mit entsprechenden Austrittsaperturen A versehenen Referenzplatte 10, welche an dem zweiten, vorderen Ende der Lichtaussendeeinrichtung 2 angeordnet ist. Jeder Einzelstrahl 70 wird hierbei durch eine entsprechende eigene Austrittsapertur A geleitet. Von dort aus treten die Einzelstrahlen 70 koaxial als gebündelter Laserstrahl 7 aus der Lichtaussendeeinrichtung 2 aus.

Die Hülle 32 ist teleskopierbar, d. h. ein Abstand zwischen dem Fangspiegel 30 und dem Facettenspiegel 40 ist variierbar. Eine erneute Fokussierung erfolgt durch Verschwenken der Kippspiegel 5.

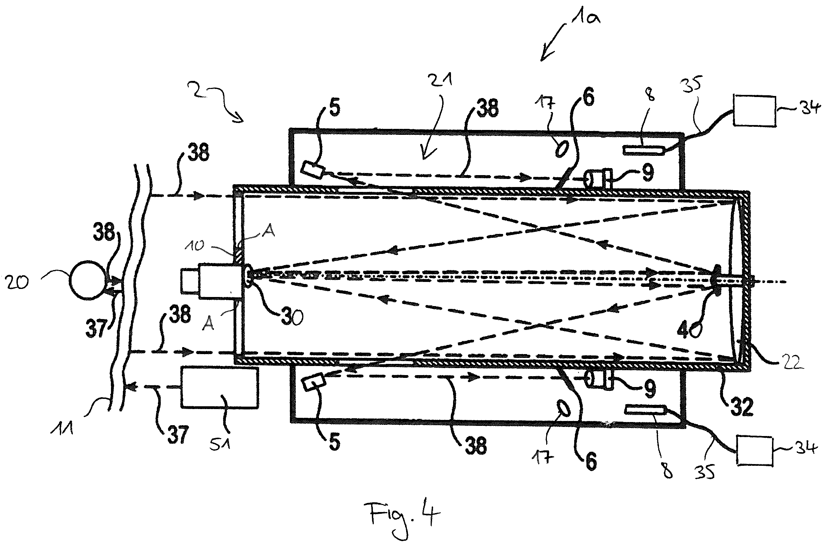

Weiter umfasst die Vorrichtung 1a eine Beleuchtungseinrichtung 51, welche dazu ausgebildet ist, einen Beleuchtungslaserstrahl 37 auf das Objekt 20 auszusenden. In Figur 4 ist eine entsprechende Querschnittsansicht der Vorrichtung 1a illustriert. Der Beleuchtungslaserstrahl 37 trifft auf das Objekt 20 und wird dort reflektiert. Das reflektierte Licht 38 tritt durch die Aperturen A, wird von dem Kollimatorspiegel 22 auf den Fangspiegel 30, von dort aus auf den Facettenspiegel 40 und über den jeweiligen Kippspiegel 5 auf den entsprechenden Strahlenteilerspiegel 6 abgelenkt. Das reflektierte Licht 38 tritt durch diesen hindurch und trifft auf ein jeweiliges Sensorelement 9. Die jeweiligen Sensorelemente 9 sind Teil einer Sensoreinrichtung, wobei jedem Laser 34 und somit jedem Einzelstrahl 70 ein entsprechendes Sensorelement 9 zugeordnet ist. Vorzugsweise weisen die Sensorelemente 9 Kameras auf.

Die Sensorelemente 9 können einerseits dazu dienen, Winkelablagen zu bestimmen, welche durch atmosphärische Turbulenzen 11 während der Lichtlaufzeit entstehen, und von einer nicht dargestellten Regeleinrichtung mittels der Kippspiegel 5 korrigiert werden. Die Sensoreinrichtung ist dazu ausgelegt, die von den Sensorelementen 9 erfassten Signale miteinander zu vergleichen. So können die Strahlungsleistungen und die Phasen des an den jeweiligen Sensorelementen 9 reflektierten Lichts 38 miteinander verglichen werden. Dadurch können relative Änderungen der Lichtintensität und der Phase des reflektierten Lichts 38 entlang der entsprechenden Lichtpfade, und dadurch insbesondere auch die relativen Änderungen der Lichtintensität und der Phase der Einzelstrahlen 70 ermittelt werden.

Die Sensoreinrichtung kann somit die exakten Winkelablagen für die Einzelstrahlen 70 mit hoher Genauigkeit berechnen. Die derart von der Sensoreinrichtung ermittelten Informationen werden an die Regeleinrichtung übermittelt, welche dazu ausgebildet ist, die Kippspiegel 5 und/oder den optional ebenfalls als Kippspiegel ausgebildeten Fangspiegel 30 derart anzusteuern, dass die Winkelablagen korrigiert werden.

Darüber hinaus ist die Regeleinrichtung dazu ausgebildet, die Laser 34 anzusteuern und die Strahlungsleistungen der Laser 34 zu verändern. Dazu kann die Regeleinrichtung die integrale Leistung des von den jeweiligen Sensorelementen 9 empfangenen reflektierten Lichts 38 bestimmen. Die Intensitäten werden dann über einen geschlossenen Regelkreis derart angepasst, dass die Auswirkungen der atmosphärischen Turbulenzeffekte auf die Intensitätsverteilung kompensiert werden.

Vorzugsweise weist die Beleuchtungseinrichtung 51 einen von den Lasern 34 abweichenden Wellenlängenbereich auf. Die Regeleinrichtung kann darüber hinaus dazu ausgebildet sein, die Wellenabhängigkeit durch Einberechnung der Rytov-Varianz zu korrigieren, und somit die für den Beleuchtungslaserstrahl berechnete Abhängigkeit bzw. Veränderung der Strahlungsleistung in eine entsprechende Abhängigkeit für die Einzelstrahlen 70 umrechnen.

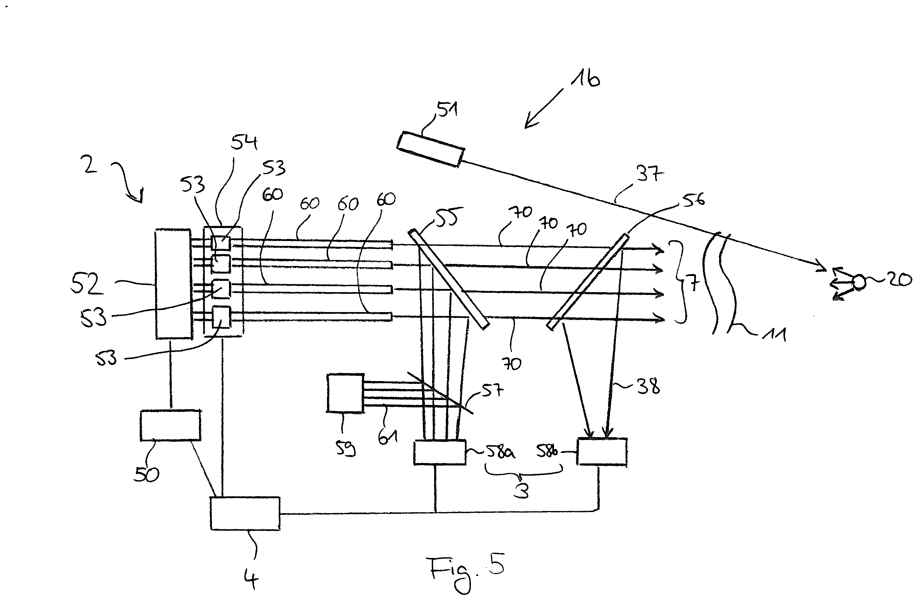

In Figur 5 ist eine Vorrichtung 1b zum Bestrahlen eines Objekts 20 gemäß einer dritten Ausführungsform der Erfindung in einer schematischen Querschnittsansicht illustriert. Eine Lichtaussendeeinrichtung 2 umfasst einen Hauptlaser bzw. Master-Oszillator 50, welcher Laserlicht erzeugt, welches über einen Faserkoppler 52 in eine Vielzahl von Lichtleitern 60 eingekoppelt wird. Die Lichtleiter 60 umfassen laserdiodengepumpte Neodym-Glasfaserlaser als Faserlaser-Verstärker, sodass eine Strahlungsleistung des Laserlichts in den jeweiligen Lichtleitern 60 verstärkt wird. Aus den Lichtleitern 60 treten jeweilige Einzelstrahlen 70 aus, welche auf einen ersten Strahlenteiler 55 treffen, wobei ein geringer Anteil der ausgesendeten Einzelstrahlen 70 auf ein zweiten Strahlenteiler 57 abgelenkt wird, dort mit Strahlung 61 von einem Lokal-Oszillator 59 gemischt wird und auf ein erstes Sensorelement 58a trifft.

Der Hauptanteil der ausgesendeten Einzelstrahlen 70 tritt durch einen dritten Strahlenteiler 56 hindurch und wird auf das Objekt 20 ausgerichtet.

Die Vorrichtung 1b umfasst weiter eine Beleuchtungseinrichtung 51, welche einen Beleuchtungslaserstrahl 37 auf das Objekt 20 aussendet. Der von dem Objekt 20 reflektierte Beleuchtungslaserstrahl 38 trifft auf den dritten Strahlenteiler 56 und wird auf eine zweite Sensoreinheit 58b abgelenkt. Die zweite Sensoreinheit 58b umfasst einen Wellenfrontsensor, welche dazu ausgelegt ist, anhand der Phasenverschiebung die Veränderungen der Phasen der jeweiligen Einzelstrahlen 70 zu bestimmen. Zusätzlich ist die zweite Sensoreinheit 58b dazu ausgelegt, die Intensitätsverteilung bzw. die Strahlungsleistung der reflektierten Strahlung 38 zu messen

Die erste Sensoreinheit 58a und die zweite Sensoreinheit 58b sind Teil einer Sensoreinrichtung 3. Die Sensoreinrichtung 3 ist dazu ausgelegt, aus den Mischsignalen der ersten bzw. zweiten Sensoreinheit 58a, 58b die jeweiligen Phasendifferenzen und die jeweiligen Strahlungsleistungsdifferenzen der jeweiligen Einzelstrahlen 70 zu bestimmen. Die Sensoreinrichtung 3 ermittelt die Veränderung der jeweiligen Lichtleistung der Einzelstrahlen 70 während der Lichtlaufzeit zum Objekt 20. Die zweite Sensoreinheit 58b kann hierzu einen Hartmann-Shack-Sensor umfassen. Dadurch kann innerhalb der gesamten Empfangsapertur mittels Detektorelementen in einer Vielzahl von Subaperturen die jeweilige Intensität und Wellenfrontveränderung der Strahlung 38 bestimmt werden.

Die von der Sensoreinrichtung 3 ermittelten Informationen werden an eine Regeleinrichtung 4 übermittelt. Die Regeleinrichtung 4 ist dazu ausgelegt, eine optimale Phasenkopplung der einzelnen Faserzweige und eine optimale Lichtleistung der Einzelstrahlen 70 zu bestimmen. Die Rechnereinrichtung 4 steuert hierzu eine Strahlmodifiziereinrichtung 54 an, welche eine Vielzahl von Strahlmodifiziereinheiten 53 umfasst, die in den einzelnen Lichtleitern 60 angeordnet sind. Die Strahlmodifiziereinheiten 53 umfassen integrierte elektrooptische Phasenschieber, welche dazu ausgebildet sind, die Phasen der Einzelstrahlen 70 zu variieren, und entsprechende Strahlleistungsvariationseinheiten, welche dazu ausgebildet sind, die Strahlleistungen der Einzelstrahlen 70 anzupassen. Hierzu können Amplitudenmodulatoren vorgesehen sein. Die Anpassung der Strahlleistungen der Einzelstrahlen 70 kann auch durch die Variation der Leistung der Pumpenergie der Faserlaser-Verstärker erfolgen.

Die Regeleinrichtung 4 ist dazu ausgelegt, sowohl die Phasen als auch die Lichtstärken der Einzelstrahlen 70 derart anzupassen, dass die Intensität des Laserstrahls 7 beim Auftreffen auf das Objekt 20 maximiert wird.

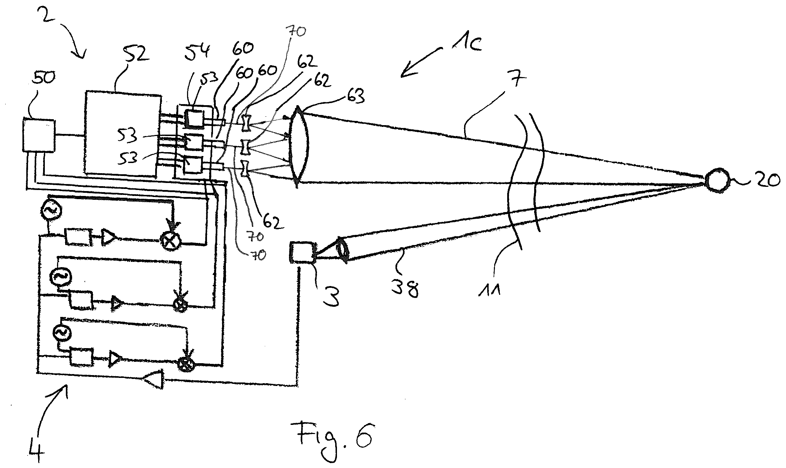

In Figur 6 ist eine schematische Querschnittsansicht einer Vorrichtung 1c zum Bestrahlen eines Objekts 20 gemäß einer vierten Ausführungsform der Erfindung illustriert. Die Lichtaussendeeinrichtung 2 entspricht im Wesentlichen derjenigen der Vorrichtung 1b gemäß der dritten Ausführungsform, sodass eine detaillierte Beschreibung hier nicht wiederholt wird. Die Lichtaussendeeinrichtung 2 weist jedoch keine Strahlenteiler 55, 56 auf. Stattdessen werden die Einzelstrahlen 70 über entsprechende Zerstreuungslinsen 62 aufgefächert und über eine Sammellinse 63 als gebündelter Laserstrahl 7 auf das Objekt 20 fokussiert. Weiter kann bei der Vorrichtung 1c auf eine Beleuchtungseinrichtung 51 verzichtet werden. Vielmehr wird der Laserstrahl 7 selbst am Objekt 20 reflektiert und das reflektierte Licht 38 wird von einer Sensoreinheit 3 empfangen, welche als nichtkohärenter Detektor ausgebildet ist. Die Sensoreinrichtung 3 übermittelt ein entsprechendes Sensorsignal an eine Regeleinrichtung 4.

Die Regeleinrichtung 4 ist dazu ausgebildet, ein Multi-Dither-Verfahren durchzuführen. Hierzu werden über oben beschriebene Strahlmodifiziereinheiten 53 die Phasen der Einzelstrahlen 70 mit unterschiedlichen Frequenzen moduliert. Anhand des vom Objekt 20 zurückgestreuten und empfangenen Lichts 38 bestimmt die Sensoreinrichtung 3 für jeden Einzelstrahl 70 mittels elektronischer Filter die modulationsabhängige Änderung der Strahlungsleistung aufgrund von Turbulenzen 11. Mittels Closed-Loop-Regelung werden die Phasen der Einzelstrahlen 70 von der Regeleinrichtung 4 derart moduliert, dass die Intensität des Laserstrahls 7 beim Auftreffen auf das Objekt 20 maximiert wird.

Zusätzlich wird durch Auswertung der Strahlungsleistung des reflektierten Lichts 38 die Strahlungsleistung für jede der bei dem Multi-Dither-Verfahren verwendeten Modulationsfrequenzen getrennt gemessen und ausgewertet. Die Regeleinrichtung 4 passt die Strahlungsleistungen der entsprechenden Einzelstrahlen 70, welche den jeweiligen Modulationsfrequenzen zugeordnet sind, proportional zu diesen Messgrößen an. Die Strahlungsleistungen werden somit derart eingestellt, dass eine Leistungsoptimierung der gesamten Laserstrahlung im Ziel erreicht wird, d. h. die Intensität des Laserstrahls 7 beim Auftreffen auf das Objekt 20 maximiert wird.

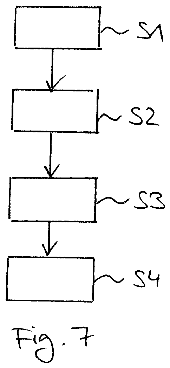

In Figur 7 ist ein Flussdiagramm eines Verfahrens zum Bestrahlen eines Objekts 20 illustriert.

Hierzu wird in einem Verfahrensschritt S1 ein aus einer Vielzahl von Einzelstrahlen 70 gebündelter Laserstrahl 7 auf das Objekt 20 ausgesendet. Eine Lichtleistung und eine Phase der Einzelstrahlen 70 sind jeweils einstellbar.

In einem Verfahrensschritt S2 wird Licht 38, welches von dem Objekt 20 reflektiert wurde, empfangen. Das Licht 38 kann, wie in Figur 6 illustriert, von einer Reflexion des Laserstrahls 7 selbst herrühren. Das reflektierte Licht 38 kann jedoch auch von einer Reflexion eines Beleuchtungslaserstrahls stammen, wie in den Figuren 2 bis 5 illustriert.

In einem weiteren Schritt S3 werden Informationen bezüglich einer Veränderung der jeweiligen Strahlungsleistung und der jeweiligen Phase der Einzelstrahlen 70 während der Lichtlaufzeit zum Objekt 20 anhand des empfangenen reflektierten Lichts ermittelt.

In einem Verfahrensschritt S4 werden die Strahlungsleistungen und die Phasen der Einzelstrahlen 70 in Abhängigkeit von den ermittelten Informationen angepasst. Die Anpassung erfolgt vorzugsweise derart, dass die Intensität des Laserstrahls 7 beim Auftreffen auf das Objekt 20 maximiert wird.

Das Verfahren kann insbesondere durch eine der oben beschriebenen Vorrichtungen 1, 1a, 1b, 1c geführt werden.

### BEZUGSZEICHENLISTE

- 1, 1a, 1b, 1c: Vorrichtungen zu Bestrahlen eines Objekts
- 2: Lichtaussendeeinrichtung
- 3: Sensoreinrichtung
- 4: Regeleinrichtung
- 5: Kippspiegel
- 6: Strahlenteilerspiegel
- 7: Laserstrahl
- 8: Faserstecker
- 9: Sensorelement
- 10: Referenzplatte
- 11: Turbulenzen
- 17: Parabolspiegel
- 20: Objekt
- 21: Strahlenkombinationseinrichtung
- 22: Kollimatorspiegel
- 30: Fangspiegel
- 32: Hülle
- 34: Laser
- 35: Lichtleitfaser
- 37: Beleuchtungslaserstrahl
- 38: reflektiertes Licht
- 40: Facettenspiegel
- 50: Hauptlaser
- 51: Beleuchtungseinrichtung
- 52: Faserkoppler
- 53: Strahlmodifiziereinheit
- 54: Strahlmodifiziereinrichtung
- 55: erster Strahlenteiler
- 56: dritter Strahlenteiler
- 57: zweiter Strahlenteiler
- 58a: erste Sensoreinheit
- 58b: zweite Sensoreinheit
- 59: Lokal-Oszillator
- 60: Lichtleiter
- 62: Zerstreuungslinse
- 63: Sammellinse
- 70: Einzelstrahlen
- A: Austrittsapertur
- A': Subapertur
- X: axiale Richtung

## Patentansprüche

1. Vorrichtung (1; 1a; 1b; 1c) zum Bestrahlen eines Objekts (20), mit:
einer Lichtaussendeeinrichtung (2) zum Aussenden eines aus einer Vielzahl von Einzelstrahlen (70) gebündelten Laserstrahls (7) auf das Objekt (20), wobei jeweils eine Strahlungsleistung und eine Phase der Einzelstrahlen (70) einstellbar sind;
einer Sensoreinrichtung (3), welche dazu ausgebildet ist, von dem Objekt (20) reflektiertes Licht (38) zu empfangen und daraus Informationen bezüglich einer Veränderung der jeweiligen Strahlungsleistung und der jeweiligen Phase der Einzelstrahlen (70) während der Lichtlaufzeit zum Objekt (20) zu ermitteln; und
einer Regeleinrichtung (4), welche dazu ausgebildet ist, die Strahlungsleistungen und die Phasen der Einzelstrahlen (70) in Abhängigkeit von den von der Sensoreinrichtung (3) ermittelten Informationen anzupassen;
wobei die Regeleinrichtung (4) ferner dazu ausgelegt ist, im Betrieb die Phasen der Einzelstrahlen (70) mit unterschiedlichen Frequenzen zu modulieren, wobei die Sensoreinrichtung (3) dazu ausgelegt ist, anhand des reflektierten Lichts (38) eine modulationsabhängige Strahlungsleistungsveränderung der Einzelstrahlen (70) während der Lichtlaufzeit zum Objekt (20) zu ermitteln, und wobei die Regeleinrichtung (4) dazu ausgelegt ist, die Strahlungsleistungen und die Phasen der Einzelstrahlen (70) derart zu verändern, dass eine Intensität des Laserstrahls (7) beim Auftreffen auf das Objekt (20) maximiert wird.

2. Vorrichtung (1; 1a) nach Anspruch 1, wobei die Lichtaussendeeinrichtung (2) jeweils einen Laser (34) zum Erzeugen der jeweiligen Einzelstrahlen (70) aufweist.

3. Vorrichtung (1; 1a) nach Anspruch 2, wobei die Lichtaussendeeinrichtung (2) ferner eine Strahlenkombinationseinrichtung (21) umfasst, welche die Einzelstrahlen (70) zu dem Laserstrahl (7) kombiniert.

4. Vorrichtung (1; 1a) nach Anspruch 3, wobei die Strahlenkombinationseinrichtung (21) einen Facettenspiegel (40), einen Fangspiegel (30) und einen Kollimatorspiegel (22) umfasst, wobei die Einzelstrahlen (70) über den Facettenspiegel (40) auf den Fangspiegel (30) richtbar sind, wobei der Fangspiegel (30) die Einzelstrahlen (70) auf den Kollimatorspiegel (22) umlenkt, und wobei der Kollimatorspiegel (22) dazu ausgebildet ist, die Einzelstrahlen (70) im Wesentlichen koaxial als Laserstrahl (7) auszusenden.

5. Vorrichtung (1; 1a) nach Anspruch 4, wobei der Fangspiegel (30) relativ zu dem Kollimatorspiegel (22) axial verschiebbar angeordnet ist.

6. Vorrichtung (1; 1b; 1c) nach Anspruch 1, wobei die Lichtaussendeeinrichtung (2) ferner einen Hauptlaser (50) zum Erzeugen von Laserlicht und eine Vielzahl von Lichtleitern (60) aufweist, und wobei das erzeugte Laserlicht in die Lichtleiter (60) einleitbar ist, wobei die Lichtleiter (60) zum Aussenden der jeweiligen Einzelstrahlen (70) ausgebildet sind.

7. Vorrichtung (1; 1a; 1b) nach einem der vorangehenden Ansprüche, wobei die Vorrichtung (1; 1a; 1b) ferner eine Beleuchtungseinrichtung (51) aufweist, welche dazu ausgelegt ist, einen Beleuchtungslaserstrahl (37) auf das Objekt (20) auszusenden, wobei das von der Sensoreinrichtung (3) empfangene und ausgewertete reflektierte Licht (38) den an dem Objekt (20) reflektierten Beleuchtungslaserstrahl (37) umfasst.

8. Vorrichtung (1; 1a; 1b) nach Anspruch 7, wobei die Beleuchtungseinrichtung (51) den Beleuchtungslaserstrahl (37) in einem Wellenlängenbereich aussendet, welcher sich von dem Wellenlängenbereich des Laserstrahls (7) unterscheidet.

9. Verfahren zum Bestrahlen eines Objekts (20), mit den Schritten:
Aussenden (S1) eines aus einer Vielzahl von Einzelstrahlen (70) gebündelten Laserstrahls (7) auf das Objekt (20), wobei jeweils eine Strahlungsleistung und eine Phase der Einzelstrahlen (70) einstellbar sind;
Modulieren der Phasen der Einzelstrahlen (70) mit unterschiedlichen Frequenzen;
Empfangen (S2) von Licht (38), welches von dem Objekt (20) reflektiert wurde;
Ermitteln (S3) von Informationen bezüglich einer Veränderung der jeweiligen Strahlungsleistung und der jeweiligen Phase der Einzelstrahlen (70) während der Lichtlaufzeit zum Objekt (20) anhand des empfangenen reflektierten Lichts (38), wobei anhand des reflektierten Lichts (38) eine modulationsabhängige Strahlungsleistungsveränderung der Einzelstrahlen (70) während der Lichtlaufzeit zum Objekt (20) ermittelt wird; und Anpassen (S4) der Strahlungsleistungen und der Phasen der Einzelstrahlen (70) in Abhängigkeit von den ermittelten Informationen derart, dass eine Intensität des Laserstrahls (7) beim Auftreffen auf das Objekt (20) maximiert wird.

10. Verfahren nach Anspruch 9, wobei die jeweiligen Einzelstrahlen (70) durch jeweils einen Laser (34) erzeugt werden.

11. Verfahren nach Anspruch 9, wobei Laserlicht mittels eines Hauptlasers (50) erzeugt wird, wobei das erzeugte Laserlicht in eine Vielzahl von Lichtleitern (60) eingeleitet wird, und wobei jeweilige Einzelstrahlen (70) aus den Lichtleitern (60) ausgesendet werden.

12. Verfahren nach einem der Ansprüche 9 bis 11, wobei das Objekt (20) mit einem Beleuchtungslaserstrahl (37) beleuchtet wird, und wobei das empfangene und ausgewertete reflektierte Licht (38) den an dem Objekt (20) reflektierten Beleuchtungslaserstrahl (37) umfasst.

13. Verfahren nach Anspruch 12, wobei ein Wellenlängenbereich des Beleuchtungslaserstrahls (37) sich von dem Wellenlängenbereich des Laserstrahls (7) unterscheidet.

## Claims

1. Device (1; 1a; 1b; 1c) for irradiating an object (20), having:
a light-emitting device (2) for emitting a laser beam (7) onto the object (20), said laser beam being combined from a plurality of individual beams (70), wherein a radiant power and a phase of the individual beams (70) may be adjusted in each case;
a sensor device (3), which is embodied for the purpose of receiving light (38) that is reflected from the object (20) and to determine information therefrom in relation to a change of the respective radiant power and the respective phase of the individual beams (70) during the light propagation time to the object (20); and
a regulating device (4), which is embodied for the purpose of adapting the radiant powers and the phases of the individual beams (70) in dependence upon the information that is determined by the sensor device (3);
wherein the regulating device (4) is moreover configured for the purpose of modulating the phases of the individual beams (70) with different frequencies during operation, wherein the sensor device (3) is configured for the purpose of determining with the aid of the reflected light (38) a modulation-dependent radiant power change of the individual beams (70) during the light propagation time to the object (20),
and wherein the regulating device (4) is configured for the purpose of changing the radiant powers and the phases of the individual beams (70) in such a manner that an intensity of the laser beam (7) is maximised when said laser beam impinges upon the object (20).

2. Device (1; 1a) according to claim 1, wherein the light-emitting device (2) respectively comprises a laser (34) for generating the respective individual beams (70).

3. Device (1; 1a) according to claim 2, wherein the light-emitting device (2) moreover comprises a beam combining device (21) that combines the individual beams (70) to form the laser beam (7).

4. Device (1; 1a) according to claim 3, wherein the beam combining device (21) comprises a facetted mirror (40), a secondary mirror (30) and a collimator mirror (22), wherein the individual beams (70) may be directed via the facetted mirror (40) onto the secondary mirror (30), wherein the secondary mirror (30) deflects the individual beams (70) onto the collimator mirror (22) and wherein the collimator mirror (22) is embodied for the purpose of emitting the individual beams (70) in an essentially coaxial manner as the laser beam (7).

5. Device (1; 1a) according to claim 4, wherein the secondary mirror (30) is arranged in an axially displaceable manner relative to the collimator mirror (22).

6. Device (1; 1b; 1c) according to claim 1, wherein the light-emitting device (2) moreover comprises a main laser (50) for generating laser light and a plurality of light conductors (60) and wherein the laser light that is generated may be introduced into the light conductors (60), wherein the light conductors (60) are embodied so as to emit the respective individual beams (70).

7. Device (1; 1a; 1b) according to any one of the preceding claims, wherein the device (1; 1a; 1b) moreover comprises an illuminating device (51) that is embodied for the purpose of emitting an illuminating laser beam (37) onto the object (20), wherein the reflected light (38) that is received and evaluated by the sensor device (3) comprises the illuminating laser beam (37) that is reflected on the object (20).

8. Device (1; 1a; 1b) according to claim 7, wherein the illuminating device (51) emits the illuminating laser beam (37) in a wavelength range that differs from the wavelength range of the laser beam (7).

9. Method for irradiating an object (20), having the steps:
emitting (S1) a laser beam (7) onto the object (20), said laser beam being combined from a plurality of individual beams (70), wherein a radiant power and a phase of the individual beams (70) may be adjusted in each case;
modulating the phases of the individual beams (70) with different frequencies;
receiving (S2) light (38) that has been reflected by the object (20);
determining (S3) information in relation to a change of the respective radiant power and the respective phase of the individual beams (70) during the light propagation time to the object (20) with the aid of the reflected light (38) that is received, wherein with the aid of the reflected light (38) a modulation dependent radiant power change of the individual beams (70) is determined during the light propagation time to the object (20); and adapting (S4), in dependence upon the information that is determined, the radiant powers and the phases of the individual beams (70) in such a manner that an intensity of the laser beam (7) is maximised when the laser beam impinges upon the object (20).

10. Method according to claim 9, wherein the respective individual beams (70) are generated by means of respectively a laser (34).

11. Method according to claim 9, wherein laser light is generated by means of a main laser (50), wherein the laser light that is generated is introduced into a plurality of light conductors (60) and wherein individual beams (70) are respectively emitted by the light conductors (60).

12. Method according to any one of claims 9 to 11, wherein the object (20) is illuminated using an illuminating laser beam (37), and wherein the reflected light (38) that is received and evaluated comprises the illuminating laser beam (37) that is reflected on the object (20).

13. Method according to claim 12, wherein a wavelength range of the illuminating laser beam (37) differs from the wavelength range of the laser beam (7).

## Revendications

1. Dispositif (1 ; 1a ; 1b ; 1c) pour irradier un objet (20), comprenant :
un moyen d'émission de lumière (2) pour émettre un faisceau laser (7) formé d'une pluralité de faisceaux individuels (70) réunis sur l'objet (20), dans lequel une puissance de rayonnement et une phase des faisceaux individuels (70) sont respectivement réglables ;
un moyen capteur (3) qui est conçu pour recevoir la lumière (38) réfléchie par l'objet (20) et pour déterminer à partir de celle-ci des informations relatives à une modification de la puissance de rayonnement respective et de la phase respective des faisceaux individuels (70) pendant le temps de parcours de la lumière vers l'objet (20) ; et
un moyen de régulation (4), qui est conçu pour adapter les puissances de rayonnement et les phases des faisceaux individuels (70) en fonction des informations déterminées par le moyen capteur (3) ;
le moyen de régulation (4) étant en outre conçu pour moduler les phases des faisceaux individuels (70) à différentes fréquences pendant le fonctionnement, le moyen capteur (3) étant conçu pour déterminer, à partir de la lumière réfléchie (38), une modification de puissance de rayonnement des faisceaux individuels (70) en fonction de la modulation pendant le temps de parcours de la lumière vers l'objet (20), et le moyen de régulation (4) étant conçu pour modifier les puissances de rayonnement et les phases des faisceaux individuels (70) de manière à ce qu'une intensité du faisceau laser (7) soit maximale lorsqu'il atteint l'objet (20).

2. Dispositif (1 ; 1a) selon la revendication 1, dans lequel le moyen d'émission de lumière (2) présente un laser (34) pour générer les faisceaux individuels respectifs (70).

3. Dispositif (1 ; 1a) selon la revendication 2, dans lequel le moyen d'émission de lumière (2) comprend en outre un moyen de combinaison de faisceaux (21) qui combine les faisceaux individuels (70) en un faisceau laser (7).

4. Dispositif (1 ; 1a) selon la revendication 3, dans lequel le moyen de combinaison de faisceaux (21) comprend un miroir à facettes (40), un miroir secondaire (30) et un miroir collimateur (22), dans lequel les faisceaux individuels (70) peuvent être dirigés par le miroir à facettes (40) sur le miroir secondaire (30), dans lequel le miroir secondaire (30) dévie les faisceaux individuels (70) sur le miroir collimateur (22) et dans lequel le miroir collimateur (22) est conçu pour émettre les faisceaux individuels (70) de manière sensiblement coaxiale sous la forme du faisceau laser (7).

5. Dispositif (1 ; 1a) selon la revendication 4, dans lequel le miroir secondaire (30) est disposé de manière à pouvoir être déplacé axialement par rapport au miroir collimateur (22).

6. Dispositif (1 ; 1b ; 1c) selon la revendication 1, dans lequel le moyen d'émission de lumière (2) présente en outre un laser principal (50) pour générer une lumière laser et une pluralité de guides de lumière (60), et dans lequel la lumière laser générée peut être introduite dans les guides de lumière (60), les guides de lumière (60) étant conçus pour émettre les faisceaux individuels respectifs (70).

7. Dispositif (1 ; la ; 1b) selon l'une des revendications précédentes, dans lequel le dispositif (1 ; la ; 1b) présente en outre un moyen d'éclairage (51) qui est conçu pour émettre un faisceau laser d'éclairage (37) sur l'objet (20), dans lequel la lumière réfléchie (38) reçue et évaluée par le moyen capteur (3) comprend le faisceau laser d'éclairage (37) réfléchi sur l'objet (20).

8. Dispositif (1 ; 1a ; 1b) selon la revendication 7, dans lequel le moyen d'éclairage (51) émet le faisceau laser d'éclairage (37) dans une gamme de longueurs d'onde qui est différente de la gamme de longueurs d'onde du faisceau laser (7).

9. Procédé pour irradier un objet (20), comprenant les étapes suivantes :
émission (S1) d'un faisceau laser (7) formé d'une pluralité de faisceaux individuels (70) réunis sur l'objet (20), dans lequel une puissance de rayonnement et
une phase des faisceaux individuels (70) sont respectivement réglables ;
modulation des phases des faisceaux individuels (70) à différentes fréquences ;
réception (S2) d'une lumière (38) réfléchie par l'objet (20) ;
détermination (S3), à partir de la lumière réfléchie (38), d'informations concernant une modification de la puissance de rayonnement respective et de la phase respective des faisceaux individuels (70) pendant le temps de parcours de la lumière vers l'objet (20), une modification de la puissance de rayonnement des faisceaux individuels (70) en fonction de la modulation étant déterminée, à partir de la lumière réfléchie (38),
pendant le temps de parcours de la lumière vers l'objet (20) ; et
adaptation (S4) des puissances de rayonnement et des phases des faisceaux individuels (70) en fonction des informations déterminées de manière à ce qu'une intensité du faisceau laser (7) soit maximale lorsqu'il atteint l'objet (20).

10. Procédé selon la revendication 9, dans lequel les faisceaux individuels respectifs (70) sont générés par un laser respectif (34).

11. Procédé selon la revendication 9, dans lequel une lumière laser est générée au moyen d'un laser principal (50), dans lequel la lumière laser générée est introduite dans une pluralité de guides de lumière (60) et dans lequel des faisceaux individuels respectifs (70) sont émis à partir des guides de lumière (60).

12. Procédé selon l'une des revendications 9 à 11, dans lequel l'objet (20) est éclairé par un faisceau laser d'éclairage (37) et dans lequel la lumière réfléchie reçue et évaluée (38) comprend le faisceau laser d'éclairage (37) réfléchi sur l'objet (20).

13. Procédé selon la revendication 12, dans lequel une gamme de longueurs d'onde du faisceau laser d'éclairage (37) est différente de la gamme de longueurs d'onde du faisceau laser (7).
